# FASCICULE DE BREVET EUROPEEN

(11) **EP 1 467 479 B1**
(45) Date de publication et mention de la délivrance du brevet: **24.11.2010**
(21) Numéro de dépôt: 04007609.3
(22) Date de dépôt: 30.03.2004
(51) Int. Cl.: H02P 7/00, E06B 9/68, E06B 9/86

(54) **Dispositif d'entraînement d'un élément de fermeture**
Antriebsvorrichtung für ein Schliesselement
Drive device for a closing unit

(30) Priorité: 08.04.2003 FR 0304347
(43) Date de publication de la demande: 13.10.2004
(73) Titulaire: Somfy SAS, 74300 Cluses (FR)
(72) Inventeur: Bruno, Serge, 74460 Marnaz (FR); Bouix, Marc, 74440 Taninges (FR)
(74) Mandataire: Bugnion Genève

(56) Documents cités:
- EP-A- 0 527 389
- DE-A- 10 034 527
- JP-A- 61 037 630
- ARNOLD AJ ET AL: "Hall Effect Current Sense Module. April 1975." IBM TECHNICAL DISCLOSURE BULLETIN, vol. 17, no. 11, 1 avril 1975 (1975-04-01), pages 3218-3219, XP002264619 New York, US
- KNICKERMEYER K H: "Magnetoresistive Detection Apparatus. January 1976." IBM TECHNICAL DISCLOSURE BULLETIN, vol. 18, no. 8, 1 janvier 1976 (1976-01-01), pages 2565-2566, XP002264620 New York, US
- PATENT ABSTRACTS OF JAPAN vol. 1997, no. 08, 29 août 1997 (1997-08-29) & JP 09 098591 A (HONDA MOTOR CO LTD;TOYO DENSO CO LTD), 8 avril 1997 (1997-04-08)

## Description

L'invention concerne un dispositif d'entraînement d'un élément de fermeture, d'occultation ou de protection solaire d'un bâtiment, selon le préambule de la revendication 1. Elle concerne encore un procédé de détection d'une tentative de manoeuvre d'un élément de fermeture, d'occultation ou de protection solaire entraîné par un tel dispositif.

Il est connu d'utiliser des moteurs à courant continu pour manoeuvrer de tels éléments.

On connaît de la demande JP 2002-213157, un dispositif d'entraînement d'un volet roulant d'un bâtiment, comprenant un moteur à courant continu, une alimentation électrique, des conducteurs d'alimentation du moteur, des moyens de détection du courant circulant dans les conducteurs et des moyens de commutation reliant dans un premier état le moteur à l'alimentation et court-circuitant les bornes du moteur dans un second état. Dans le second état, le court-circuit réalisé entre les bornes du moteur permet de freiner le volet roulant pour que celui-ci reste dans sa position malgré des sollicitations mécaniques pouvant être dues au vent ou à une tentative d'intrusion. Les moyens de détection du courant électrique circulant dans les conducteurs permettent de détecter d'éventuels mouvements du volet. En effet, ces mouvements du volet entraînent une rotation du moteur et des courants dans les conducteurs court-circuitant le moteur. Lorsqu'un mouvement est détecté une action, telle que l'activation d'une alarme, est automatiquement effectuée.

Les moyens de détection du courant induit comprennent une résistance, par exemple de quelques ohms, disposée en série avec les conducteurs d'alimentation du moteur et reliée à un circuit de détection de tension, typiquement un comparateur, comparant la tension aux bornes de cette résistance à une tension seuil.

La présence de cette résistance, même si elle présente une valeur faible comparée à celle du bobinage de l'induit du moteur, nuit considérablement à l'efficacité du freinage dynamique du moteur. Par conséquent, des efforts moins importants, en particulier des efforts non brutaux, permettront de manoeuvrer le volet roulant.

Le but de cette demande de brevet japonais est de détecter le mouvement du volet roulant et non de l'empêcher. Par exemple, dans un deuxième mode de réalisation, il est proposé d'associer à un moteur d'entraînement une génératrice tachymétrique pour permettre la détection du mouvement du volet. Le déplacement non autorisé du volet entraîne la rotation de la génératrice tachymétrique et l'émission d'une alarme pendant le déplacement et éventuellement pendant une période déterminée après le déplacement. Le mouvement cesse si l'alarme est suffisamment dissuasive pour éloigner le malfaiteur ou si le déplacement a été suffisant pour permettre l'intrusion.

Il apparaît donc important de pouvoir détecter une tentative de mouvement du volet plutôt que le mouvement lui-même. Cette détection de tentative devant être faite alors que le mouvement du volet est quasiment nul.

Le but de l'invention est de proposer un dispositif d'entraînement permettant de pallier aux inconvénients cités et d'améliorer les dispositifs connus de l'art antérieur. L'invention propose en particulier un dispositif d'entraînement permettant d'améliorer l'efficacité du freinage dynamique de l'élément entraîné et permettant de détecter des tentatives de manoeuvre de l'élément.

Dans d'autres domaines éloignés de celui de l'invention, il est connu de procéder au freinage dynamique des moteurs ou de mesurer le courant dans l'armature du moteur, mais sans qu'il y ait incitation à combiner ces moyens pour déboucher sur l'invention.

On connaît, par exemple de la demande EP 0 527 389, un dispositif de commande de l'alimentation électrique d'un actionneur. Ce dispositif comprend des moyens de freinage dynamique du moteur.

On connaît du brevet GB 1,142,789 un dispositif de régulation d'un courant électrique continu. Il comprend des résistances en série, en parallèle de chacune desquelles sont connectés des shunts dont l'état de conduction du courant électrique peut être commandé et comprend en outre un moyen de mesure du courant. Ce moyen permet de commander l'état de conduction des shunts.

On connaît en outre du brevet JP 61-037630 un séchoir à grain. L'un des organes de ce séchoir est entraîné par un moteur. Des corps étrangers peuvent perturber le fonctionnement de cet organe. Les dysfonctionnements sont détectés par la mesure du courant d'alimentation du moteur, effectuée par un capteur de courant.

Le dispositif d'entraînement selon l'invention est caractérisé par la partie caractérisante de la revendication 1.

Différents modes de réalisation du dispositif sont définis par les revendications dépendantes 2 à 4.

Le procédé de détection d'une tentative de manoeuvre d'un élément de fermeture entraîné par un tel dispositif est caractérisé par la partie caractérisante de la revendication 5 ou par la partie caractérisante de la revendication 6.

Le dessin annexé représente, à titre d'exemples, deux modes de réalisation du dispositif selon l'invention.

La figure 1 est un schéma d'un premier mode de réalisation du dispositif d'entraînement selon l'invention.

La figure 2 est un schéma d'un second mode de réalisation du dispositif d'entraînement selon l'invention.

La figure 3 est un graphique représentant les variations de la réluctance d'un moteur à courant continu en fonction de la position angulaire de son rotor.

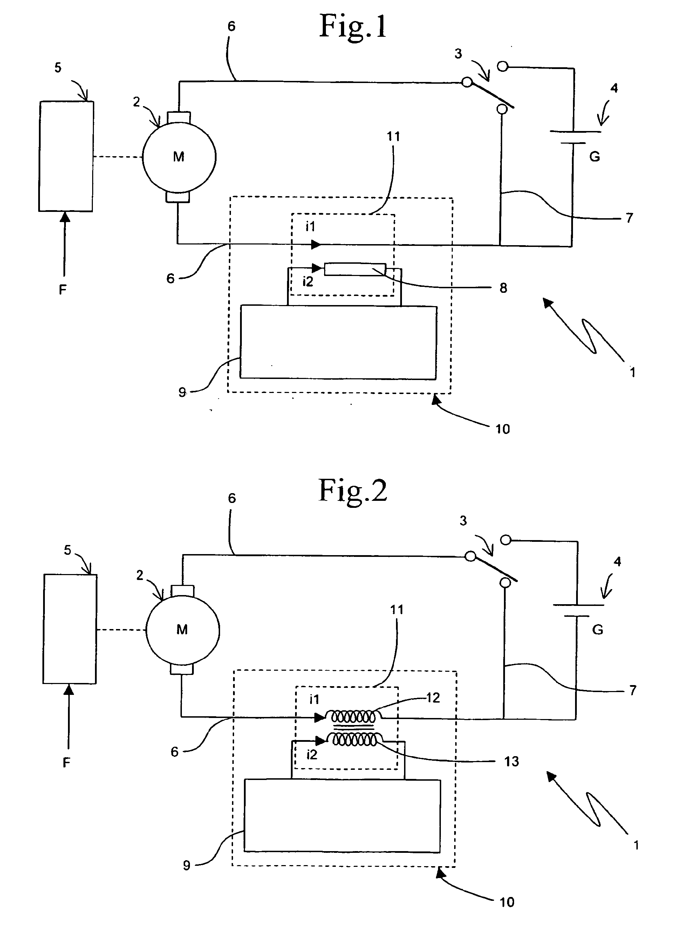

Le dispositif d'entraînement 1 représenté aux figures 1 et 2 comprend principalement un moteur électrique 2 à courant continu, relié à un générateur de courant continu 4 par des conducteurs électriques 6 et un commutateur 3. Le moteur est lié cinématiquement à un élément 5 de fermeture, d'occultation ou de protection solaire via un réducteur non représenté.

Le commutateur 3 permet, dans un premier état, l'alimentation du moteur 2 et dans un second état d'en court-circuiter les bornes. Pour simplifier, le commutateur 3 est représenté sous forme unipolaire cependant, il est clair que l'inversion de sens du moteur pour commander le déplacement de l'élément 5 en sens inverse requiert une commutation bipolaire réalisée par exemple à l'aide de deux commutateurs unipolaires.

Le dispositif d'entraînement 1 comprend en outre, des moyens de détection du mouvement de l'élément 5 de fermeture, d'occultation ou de protection solaire comprenant des moyens 10 de détection du courant circulant dans les fils d'alimentation 6 du moteur. Ces moyens comprennent un dispositif 11 à couplage magnétique liant les conducteurs 6 à un circuit électronique de détection 9 pouvant être alimenté par le générateur 4. Ce circuit comporte des moyens électroniques de détection, d'analyse de signal et de commande d'un dispositif d'alarme ou de tout autre dispositif.

La rotation de l'induit du moteur entraîne l'apparition d'un courant i1 dans les conducteurs 6 le court-circuitant. Ce courant i1 génère un champ magnétique qui, du fait du dispositif de couplage 11, est détecté par le circuit électronique 9 de détection.

Selon les variantes de réalisation, le champ magnétique est :
- soit directement mesuré par un conducteur résistif tel qu'une magnétorésistance ou un capteur à effet Hall, de tels éléments sont par exemple décrit aux pages 3218 et 3219 N°11 volume 17 et aux pages 2565 et 2566 N°8 volume 18 des publications « IBM technical disclosure bulletin »,
- soit utilisé pour induire, par ses variations, un courant i2 dans un conducteur secondaire.

Dans un premier mode de réalisation représenté à la figure 1, le couplage peut être directement réalisé en positionnant un composant 8 à magnétorésistance à proximité des conducteurs électriques 6 alimentant le moteur. Ce montage ne nécessite aucune résistance supplémentaire dans le circuit d'alimentation du moteur et garantit donc un freinage dynamique maximum lorsque le moteur est en court-circuit.

Dans un second mode de réalisation représenté à la figure 2, un transformateur de courant peut être utilisé, l'enroulement primaire 12 étant traversé par le courant i1 et le secondaire 13 étant relié par exemple à une résistance aux bornes de laquelle on mesure une tension que l'on compare ensuite à une tension seuil.

Il est connu en effet qu'un transformateur de courant qui ne présente que très peu de spires, voire une seule, au primaire n'augmente que très faiblement la résistance des conducteurs court-circuitant l'induit du moteur, ce qui garantit l'efficacité du freinage dynamique.

Dans tous les cas, le courant i1 et/ou ses variations sont donc indirectement analysés par le circuit électronique de détection 9 pour conclure à la présence de sollicitations de l'élément lorsque le courant i1 et/ou ses variations dépassent des valeurs de seuil fixées ou déterminées lors d'une étape d'apprentissage.

Tels qu'ils sont disposés, les moyens de détection du courant circulant dans les fils d'alimentation du moteur permettent donc de détecter au moins le courant du moteur lorsqu'il est en court-circuit.

Les moyens de détection du courant circulant dans les fils d'alimentation du moteur peuvent également être utilisés lorsque le moteur est alimenté, pour mesurer, grâce aux variations du courant i1, la position ou la vitesse du moteur et grâce à la composante continue du courant i1, le couple moteur.

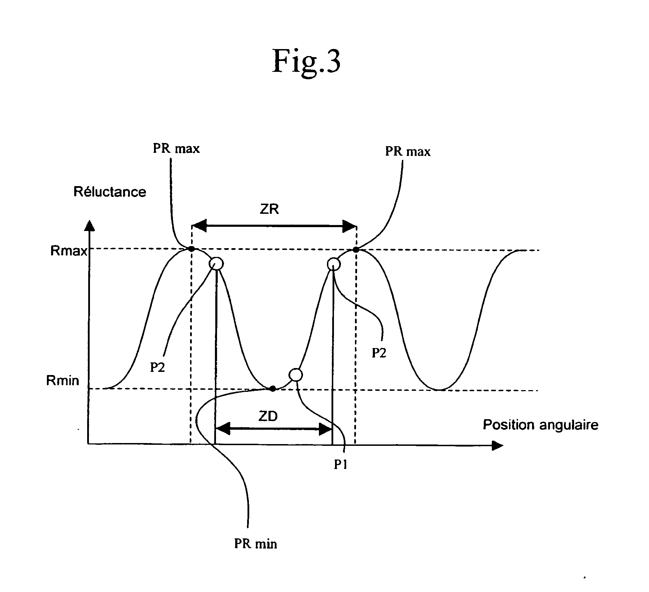

La courbe des variations de la réluctance R du moteur à courant continu utilisé dans le dispositif selon l'invention est représentée à la figure 3. Cette réluctance varie entre une valeur minimale Rmin et une valeur maximum Rmax, en fonction de la position angulaire du rotor. Le nombre de positions de réluctance minimale Rmin et de réluctance maximale Rmax sur un tour dépend notamment du nombre de paires de pôles. Une valeur minimum de réluctance d'un circuit magnétique comportant un aimant donne une position de flux maximum et une attraction maximale dans cette position. Le rotor du moteur lorsque celui-ci n'est pas alimenté tend à se stabiliser dans une position angulaire de réluctance minimale Rmin si aucun effort ne tend à l'en éloigner.

Lorsque le moteur est alimenté, son rotor passe successivement et très rapidement par des positions de réluctance minimum et maximum, le couple moteur exercé par l'interaction entre le champ magnétique et le courant dans l'induit étant normalement très supérieur au couple de rappel résultant de la variation de la réluctance. Les concepteurs de moteur s'efforcent en général d'avoir un couple réluctant (encore appelé « couple de détente ») aussi faible que possible, de manière à éviter des vibrations du moteur.

Le moteur utilisé dans le cadre de l'invention présente de préférence une fluctuation importante de la réluctance et présente, par conséquent, l'avantage d'être de faible coût.

On définit une zone ZR comme étant un intervalle de positions du rotor situées entre deux positions angulaires PRmax présentant une réluctance maximale. Cette zone est centrée sur une position de réluctance minimale PRmin.

On définit une zone ZD comme étant une zone plus restreinte que la zone ZR, elle aussi centrée sur une position de réluctance minimale PRmin. Les limites de cette zone ZD sont définies par des positions P2 correspondant à une réluctance donnée inférieure à la réluctance maximale.

Le procédé de détection de tentative d'intrusion selon l'invention consiste en ce que les moyens de détection de mouvement sont activés par un déplacement du rotor dans une zone ZD inférieure à ZR.

Ainsi, le rotor est, moteur à l'arrêt dans une première position P1 voisine de la position de réluctance minimale PRmin (l'écart dépendant d'un éventuel effort statique permanent). Le procédé selon l'invention consiste en ce que les moyens de détection sont activés même si le déplacement du rotor est extrêmement limité : par exemple jusqu'à une position P2, comprise entre la position de réluctance minimale PRmin et une des positions de réluctance maximale PRmax consécutives, ou encore un mouvement oscillatoire autour de la position P1, mais d'amplitude telle que les positions de réluctance maximale Prmax consécutives à la position de réluctance minimale ne sont jamais atteintes sans que les moyens de détection n'aient été activés.

Ce procédé permet en particulier de détecter une tentative de manoeuvre de l'élément dans le cas où le couple résistant du moteur, dû à la fois au couple réluctant, au couple de freinage et aux autres couples d'origine mécanique suffisent à maintenir strictement le déplacement du rotor dans la zone ZD.

Le moteur s'apparente alors à un verrou avec jeu équipant une porte, le déplacement du penne dans le jeu provoquant une détection d'une tentative de manoeuvre de la porte.

Pour un réducteur dont le coefficient de réduction vaut 300 et pour un moteur comportant deux positions de réluctance minimale par tour et entraînant un tube d'enroulement de 20 cm de diamètre, le « jeu de verrouillage » c'est-à-dire le mouvement du rotor du moteur est au plus d'un demi-tour et correspond à 1 mm de déplacement de l'élément en supposant les liaisons entre l'élément et le moteur rigides et/ou indéformables.

La détection doit être assurée aussi bien par un déplacement dans un sens (cas de l'apparition d'un effort permanent) que par des sollicitations alternatives dans les deux sens (cas d'un effort impulsionnel). A cet effet, les moyens de détection prévus par l'invention sont de nature :
- à permettre l'apparition d'un couple électromagnétique aussi élevé que possible,
- à permettre une mesure au moins de type impulsionnel.

Comme décrit dans l'art antérieur, le procédé et le dispositif peuvent aussi bien s'appliquer à la détection anti-intrusion qu'à la détection de vent (pour un volet, pour un store).

D'autres applications concernent le cas où la détection d'effort ou de vibration est interprétée comme un signal de commande d'ouverture. C'est par exemple l'effet voulu pour une porte motorisée, normalement fermée pour garantir l'isolation thermique d'un local. Une simple pression dans le sens d'ouverture permet au dispositif de contrôle d'enclencher l'alimentation du moteur.

## Revendications

1. Dispositif d'entraînement (1) d'un élément (5) de fermeture, d'occultation ou de protection solaire d'un bâtiment, comprenant un moteur à courant continu (2), une alimentation électrique (4), des conducteurs d'alimentation du moteur (6), des moyens de détection (10) du courant circulant dans les conducteurs (6) et des moyens de commutation (3) reliant dans un premier état le moteur (2) à l'alimentation (4) et court-circuitant les bornes du moteur dans un second état, **caractérisé en ce que** les moyens de détection (10) du courant dans les conducteurs (6) sont disposés de manière à détecter au moins le courant du moteur lorsqu'il est en court-circuit et comprennent un dispositif (11) à couplage magnétique, les moyens de détection étant activés par :
- un mouvement du rotor du moteur depuis une position (P1), voisine d'une position de réluctance minimum (PRmin), jusqu'à une position (P2) située entre la position de réluctance minimum (PRmin) et l'une des positions (PRmax) de réluctance maximale consécutives, et/ou
- un mouvement oscillatoire du rotor du moteur autour d'une position (P1), voisine d'une position de réluctance minimum (PRmin), sans que soit atteinte l'une des positions (PRmax) de réluctance maximale consécutives.

2. Dispositif selon la revendication 1, **caractérisé en ce que** le dispositif (11) à couplage magnétique comprend un capteur (8) de champ magnétique positionné à proximité d'au moins un des conducteurs (6) d'alimentation du moteur.

3. Dispositif selon la revendication 1, **caractérisé en ce que** le dispositif (11) à couplage magnétique comprend un transformateur (11).

4. Dispositif selon la revendication 1, **caractérisé en ce que** le dispositif (11) à couplage magnétique comprend un capteur magnétorésistif ou à effet Hall.

5. Procédé de détection d'une tentative de manoeuvre d'un élément (5) de fermeture, d'occultation ou de protection solaire entraîné par un dispositif (1) selon l'une des revendications 1 à 4, **caractérisé en ce que** la détection est réalisée par la détection d'un mouvement du rotor du moteur depuis une position (P1), voisine d'une position de réluctance minimum (PRmin), jusqu'à une position (P2) située entre la position de réluctance minimum (PRmin) et l'une des positions (PRmax) de réluctance maximale consécutives.

6. Procédé de détection d'une tentative de manoeuvre d'un élément (5) de fermeture, d'occultation ou de protection solaire entraîné par un dispositif (1) selon l'une des revendications 1 à 4, **caractérisé en ce que** la détection est réalisée par la détection d'un mouvement oscillatoire du rotor du moteur autour d'une position (P1), voisine d'une position de réluctance minimum (PRmin), sans que soit atteinte l'une des positions (PRmax) de réluctance maximale consécutives.

## Claims

1. Device (1) for driving an closure, privacy or solar protection element (5) of a building, including a direct current motor (2), an electric power supply (4), conductors (6) for supplying power to the motor, means (10) for detecting the current flowing through the conductors (6), and switching means (3) connecting, in a first state, the motor (2) to the power supply (4), and short-circuiting the terminals of the motor in a second state, **characterised in that** the means (10) for the detection of the current flowing through the conductors (6) are disposed such as to detect at least the motor current when the motor is shortcircuited, and include a magnetic coupling device (11), the current detecting means being activated
- by a movement of the rotor of the motor from a position (P1) near to a position of minimal reluctance (PRmin), until a position (P2) that is situated between a position of minimal reluctance (PRmin) and one of the consecutive positions of maximal reluctance (PRmax), and/or
- by an oscillating movement of the rotor of the motor around a position (P1) near to a position of minimal reluctance (PRmin) but without reaching one of the consecutive positions of maximal reluctance (PRmax).

2. Device according to claim 1, **characterised in that** the magnetic coupling device (11) comprises a magnetic field sensor (8) disposed near to at least one of the conductors (6) for supplying power to the motor.

3. Device according to claim 1, **characterised in that** the magnetic coupling device (11) comprises a transformer (11).

4. Device according to claim 1, **characterised in that** the magnetic coupling device (11) comprises a magnetoresistive sensor or a Hall effect detector.

5. Method for detecting an attempt of actuating an element (5) for closure, privacy or solar protection, driven by a device (1) according to one of claims 1 to 4, **characterised in that** the detection is carried out by detecting a movement of the rotor of the motor from a position (P1) near to a position of minimal reluctance (PRmin), until a position (P2) that is situated between a position of minimal reluctance (PRmin) and one of the consecutive positions of maximal reluctance (PRmax)

6. Method for detecting an attempt of actuating an element (5) for closure, privacy or solar protection, driven by a device (1) according to one of claims 1 to 4, **characterised in that** the detection is carried out by detecting an oscillating movement of the rotor of the motor around a position (P1) near to a position of minimal reluctance (PRmin) but without reaching one of the consecutive positions of maximal reluctance (PRmax).

## Patentansprüche

1. Vorrichtung (1) zum Antrieb eines Elements (5) zum Verschliessen, zur Abdunkelung oder zum Sonnenschutz an einem Gebäude, mit einem Gleichstrommotor (2), einer elektrischen Energieversorgung (4), Speiseleitungen (6) für den Motor, Mittel (10) zur Ermittlung des in den Speiseleitungen (6) fliessenden Stroms sowie mit Mitteln (3) zur Umschaltung, die in einer ersten Stellung den Motor (2) mit der Energieversorgung (4) verbinden und in einer zweiten Stellung die Anschlüsse des Motors kurzschliessen, **dadurch gekennzeichnet, dass** die Mittel zur Feststellung (10) eines Stroms in den Speiseleitungen (6) derart angeordnet sind, dass sie mindestens den Motorstrom ermitteln, wenn er sich im Kurzschluss befindet und eine Vorrichtung (11) zur Magnetkupplung aufweisen, wobei die Mittel zur Stromfeststellung aktiviert werden,
- wenn sich der Rotor des Motors von einer Stellung (P1) in der Nähe einer Stellung des geringsten magnetischen Widerstands (PRmin) in eine Stellung (P2) bewegt hat, welche sich zwischen der Stellung des geringsten magnetischen Widerstands (PRmin) und einer der aufeinanderfolgenden Stellungen des grössten magnetischen Widerstandes (PRmax) befindet, und/oder
- wenn eine schwingende Bewegung des Rotors des Motors um eine Stellung (P1) stattfindet, welche sich in der Nähe einer Stellung des geringsten magnetischen Widerstands (PRmin) befindet, ohne dass eine der aufeinanderfolgenden Stellungen des grössten magnetischen Widerstandes (PRmax) erreicht wird.

2. Vorrichtung nach Anspruch 1, **dadurch gekennzeichnet, dass** die Vorrichtung zur Magnetkupplung (11) einen Fühler (8) für ein Magnetfeld aufweist, der in der Nähe mindestens der einen Speiseleitung (6) für den Motor angeordnet ist.

3. Vorrichtung nach Anspruch 1, **dadurch gekennzeichnet, dass** die Vorrichtung zur Magnetkupplung (11) einen Transformator (11) aufweist.

4. Vorrichtung nach Anspruch 1, **dadurch gekennzeichnet, dass** die Vorrichtung zur Magnetkupplung (11) einen magnetoresistiven Fühler oder einen Halleffektfühler aufweist.

5. Verfahren zur Ermittlung eines Versuchs zur Betätigung eines Elements (5) zum Verschliessen, zur Abdunkelung oder zum Sonnenschutz, angetrieben durch eine Vorrichtung (1) nach einem der Ansprüche 1 bis 4, **dadurch gekennzeichnet, dass** die Ermittlung dadurch verwirklicht wird, dass eine Bewegung des Rotors des Motors von einer Stellung (P1), welche sich in der Nähe einer Stellung des geringsten magnetischen Widerstandes (PRmin) befindet, bis in eine Stellung (P2) ermittelt wird, die sich zwischen der Stellung des geringsten magnetischen Widerstandes (PRmin) und einer der aufeinanderfolgenden Stellungen des grössten magnetischen Widerstandes (PRmax) befindet.

6. Verfahren zur Ermittlung eines Versuchs zur Betätigung eines Elements (5) zum Verschliessen, zur Abdunklung oder zum Sonnenschutz, angetrieben durch eine Vorrichtung (1) nach einem der Ansprüche 1 bis 4, **dadurch gekennzeichnet, dass** die Ermittlung dadurch verwirklicht wird, dass eine schwingende Bewegung des Rotors des Motors um eine Stellung (P1) ermittelt wird, welche sich in der Nähe einer Stellung des geringsten magnetischen Widerstands (PRmin) befindet, ohne dass eine der aufeinanderfolgenden Stellungen des grössten magnetischen Widerstandes (PRmax) erreicht wird.
